# EUROPEAN PATENT APPLICATION

(11) **EP 3 605 497 A1**
(43) Date of publication of application: **05.02.2020**
(21) Application number: 18772501.5
(22) Date of filing: 05.03.2018
(51) Int. Cl.: G08G 1/16, B60Q 1/04, B60Q 1/24, H04N 5/225, H04N 5/235, H04N 5/243, B60R 1/00

(54) **ILLUMINATION IMAGE CAPTURE DEVICE**

(30) Priority: 21.03.2017 JP 2017054163
(71) Applicant: Konica Minolta, Inc., Tokyo 100-7015 (JP)
(72) Inventor: YAMADA, Norihide, Tokyo 100-7015 (JP); HASHIMURA, Junji, Tokyo 100-7015 (JP)
(74) Representative: Hoffmann Eitle
(86) International application number: PCT/JP2018/008272
(87) International publication number: WO 2018/173715

(57) **Abstract**

Provided is an illumination image capture device, comprising a light emission unit, a camera, a memory, an image processing unit, and a control unit. When a high-brightness subject has been detected which has been imaged beyond the dynamic range of the camera, the control unit controls the light emission unit to repeat switching on and either switching off or dimming at a prescribed lighting timing, and controls the camera to image the subject at the timing at which the light emission unit has switched on and acquire first image data, and to image the subject at the timing at which the light emission unit has either switched off or dimmed and acquire second image data. On the basis of the difference between the first image data and the second image data, the image processing unit generates third image data in which the high-brightness subject has either been removed or been reduced in brightness from the subject which was imaged when the light emission unit switched on. Accordingly, an illumination image capture device is provided with which, while being inexpensive, it is possible, in environments which are irradiated with high-intensity light such as headlights from an oncoming car at night or sunlight during the day, for example, to acquire information of a subject in the periphery with regard to said high-intensity light.

## Description

### TECHNICAL FIELD

The present invention relates to an illumination image capture device that can contribute to safety driving by, for example, being mounted on a vehicle.

### BACKGROUND ART

In order to contribute to safety driving by avoiding erroneous determination by a driver, various types of driving support devices have been developed and mounted on vehicles. As one example, a pedestrian detection device has already been developed which images a pedestrian, etc. on a road with a camera, discriminates the pedestrian from other objects based on the feature quantity of it, and issues an alert.

However, such a driving support device does not always work perfectly and may make an erroneous determination in some use environments. For example, such a phenomenon is known that in such a case that high intensity light, such as sunlight during the day or the headlight beams of an oncoming vehicle at night, enters driver's eyes, a kind of saturated state occurs in human eye sensitivity and objects in the periphery of the high intensity light become invisible to the driver. This is not limited to humans but is also the same for an electronic camera; and therefore, the pedestrian detection device may fail to detect pedestrians.

By predicting the occurrence of such a phenomenon, contrivance such as increasing the dynamic range of a camera in advance or facilitating extracting objects in the vicinity of a light emission source of high intensity light by making full use of image processing has been made.

However, in image data whose pixels have been saturated due to reception of high intensity light, subject information is already lost in many cases, and therefore, the contrivance described above cannot be fundamental measures and its effect is limited. On the other hand, when an infrared camera performing infrared irradiation is used in imaging, visible light components of headlights can be removed based on a picked up infrared image, but irradiation of an infrared ray having a considerably high intensity is required to image a distant subject; and it becomes disadvantageous in terms of costs that an infrared camera having such a powerful infrared ray irradiation device is mounted, for example, on a vehicle.

In relation to this, Patent Literature 1 discloses a solid-state image pick up device which includes a light source for generating modulation light of a predetermined frequency and applying this modulation light toward a subject and in which the positive and negative polarities of the sensitivity of a charge-storage type photosensitive circuit are inverted in synchronization with the modulation light.

### CITATION LIST

### PATENT LITERATURE

Patent Literature 1: JP H10-93856A
Patent Literature 2: JP 2002-281387A
Patent Literature 3: JP 2011-209961A

### SUMMARY OF INVENTION

### TECHNICAL PROBLEM

According to the solid-state image pickup device in Patent Literature 1, without requiring complicated image processing by a computer, etc., only a subject desired by a photographer can be made into an image; in addition, the subject can be made into a highlighted image, and further, it can be made into an image with only a desired hue emphasized. In addition, even in a case where backlight, etc. is present, its influence is eliminated or reduced, thereby allowing the subject to be appropriately made into an image. The solid-state image pickup device in Patent Literature 1 has an excellent function; however, it costs more, compared with a general-purpose imaging device, thus becoming disadvantageous in terms of costs in mounting it on, for example, a vehicle.

In addition, the lock-in imaging system described in Patent Literature 2 is configured such that a lock-in detecting function is integrated in a charge feedback optical sensor in two-dimensional arrangement, a lock-in amplifier cycle is set by selecting one of a plurality of lock-in amplifier cycles which are preset in a lock-in amplifier cycle setting part, and a pulse light source is blinked in synchronization with the set lock-in amplifier cycle. The quantity of light received in an odd-numbered frame in a state that the pulse light source is switched on is stored as a positive electric charge and the quantity of light received in an even-numbered frame is stored as a negative electric charge; and accordingly, only an imaging object can be made into an image with satisfactory S/N by integrating the amount of stored electric charges for predetermined even-numbered frames. Thus, the recognition of a pedestrian buried in headlights at night, the photo-detection, imaging, etc., of an object with weak light which is easy to be buried in noise can be performed with a simple configuration. However, the lock-in imaging system in Patent Literature 2 also costs more, compared with a general-purpose imaging device, thus becoming disadvantageous in terms of costs in mounting it on, for example, a vehicle.

In relation to this, the onboard imaging apparatus described in Patent Literature 3 is such that an image capture timing is controlled so that an imaging element captures an image at, at least, the time when headlights are switched off, out of either when it is switched on or when it is switched off, in synchronization with the blinking cycle of the headlight, and a signal processing unit determines a light emitting subject from the captured image and outputs an alert signal when information on a distance to the light emitting subject indicates a predetermined distance or less. Thus, the onboard imaging apparatus described in Patent Literature 3 can detect, by using a general-purpose imaging device, tail lights of a preceding vehicle which are self-light emitting sources; however, it is not intended to obtain information on an object that is present in the periphery of high intensity light.

The present invention has been made in view of the problems described above, and it is an object of the present invention to provide an illumination image capture device with which, while being inexpensive, it is possible, in environments which are irradiated with high-intensity light such as the headlights of an oncoming vehicle at night or the sunlight during the day, for example, to obtain information on a subject in the periphery of the high-intensity light.

### SOLUTION TO PROBLEM

The illumination image capture device of the present invention includes: a light emission unit that emits an illumination light toward a subject by being switched on; a camera that includes an imaging element for imaging the subject and obtaining image data; a memory that stores the image data obtained by the camera; an image processing unit that processes the image data obtained by the camera; and a control unit that controls the light emission unit and the camera. When a high-brightness subject that has been imaged beyond the dynamic range of the camera is detected, the control unit controls the light emission unit to repeat switch-on and either switch-off or dimming at a predetermined lighting timing, and controls the camera to image the subject at the timing at which the light emission unit is switched on and obtain first image data and also to image the subject at the timing which the light emission unit is switched off or dimmed and obtain second image data. The image processing unit generates, based on a difference between the first image data and the second image data, third image data in which the high-brightness subject has been either removed or reduced in brightness from the subject imaged at the time of switch-on of the light emission unit.

### ADVANTAGEOUS EFFECTS OF INVENTION

According to the present invention, the illumination image capture device can be provided with which, while being inexpensive, it is possible, in environments which are irradiated with high-intensity light such as the headlights of an oncoming vehicle at night or the sunlight during the day, for example, to obtain information on a subject in the periphery of the high-intensity light. As a result, for example, only a desired subject such as a pedestrian, etc. can be detected from a specific feature quantity and further, can be displayed highlighted by being enclosed by a specified-color frame or the like; thereby, an alert, etc. to a driver can be executed and therefore, it is possible to contribute to safety driving.

### BRIEF DESCRIPTION OF DRAWINGS

[FIG. 1] FIG. 1 shows a block diagram of an illumination image capture device according to an embodiment.
[FIG. 2] FIG. 2 shows a schematic view of a headlight HL seen from the front side of a vehicle.
[FIG. 3] FIG. 3 shows the state where a vehicle VH mounted with an illumination image capture device LC is travelling at night, together with an oncoming vehicle CV and a subject OBJ.
[FIG. 4A] FIG. 4A is a time chart showing the timing of switch-on/switch-off (or dimming) of the headlight.
[FIG. 4B] FIG. 4B is a time chart showing the imaging timing of a camera.
[FIG. 5A] FIG. 5A shows an image based on first image data.
[FIG. 5B] FIG. 5B shows an image based on second image data.
[FIG. 5C] FIG. 5C shows an image based on third image data.
[FIG. 6A] FIG. 6A is a time chart showing the timing of switch-on/switch-off (or dimming) of the headlight of an oncoming vehicle.
[FIG. 6B] FIG. 6B is a time chart showing the timing of switch-on/switch-off (or dimming) of the headlight of an own vehicle.

### DESCRIPTION OF EMBODIMENT

An embodiment of the present invention will be described below with reference to drawings.

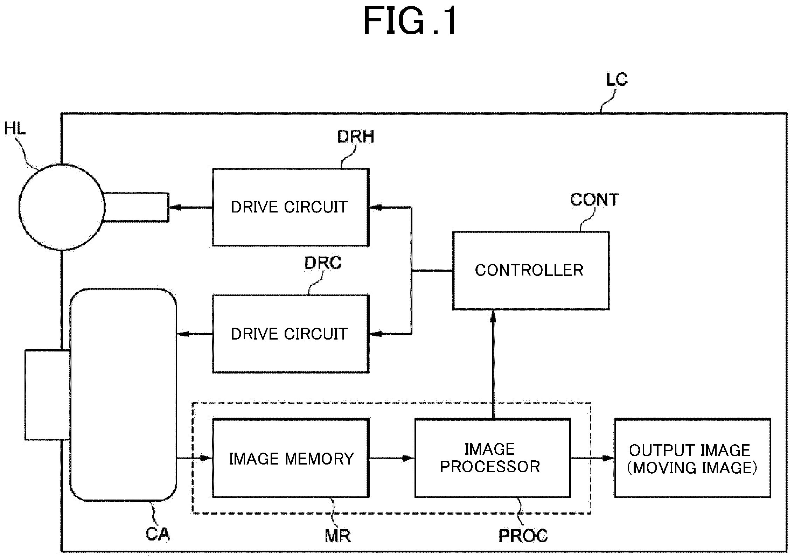

FIG. 1 shows a block diagram of an illumination image capture device according to this embodiment.

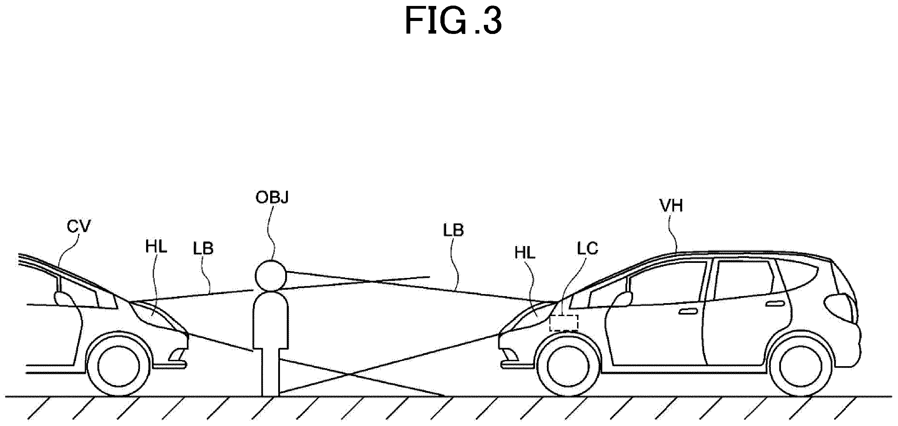

In FIG. 1, an illumination image capture device LC mounted on a vehicle (VH in FIG. 3) includes: a headlight HL that is a light emission unit for emitting an illumination light ahead of the vehicle; a drive circuit DRH that drives the head light HL; a camera CA for visible light, which includes an imaging element (not illustrated) such as a CCD or CMOS for imaging a subject ahead of the vehicle; a drive circuit DRC that drives the camera CA; a controller CONT that controls the drive circuit DRH and drive circuit DRC; an image memory MR that stores image data which is output from the camera CA; and an image processor PROC that is an image processing unit for performing image processing for the image data.

It is preferable that the camera CA can capture a moving image composed of a plurality of frames.

The drive circuit DRH, drive circuit DRC, and controller CONT constitute the control unit.

It is preferable that the image memory MR and the image processor PROC are incorporated into a single chip so as to achieve miniaturization and also improve an operation speed.

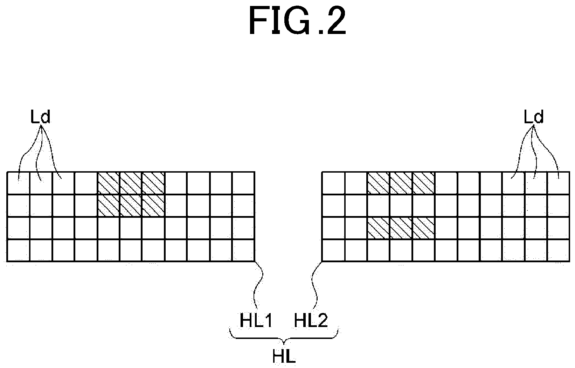

FIG. 2 shows a schematic view of the headlight HL seen from the front side of a vehicle.

The headlight HL includes a light emission unit HL1 arranged on the front right side of a vehicle body, and a light emission unit HL2 arranged on the front left side of the vehicle body.

The light emission units HL1 and HL2 each includes light emitting diodes Ld (or laser diodes) which are arranged in n rows x m columns longitudinally and laterally. Each of the light emitting diodes Ld is independently controlled so as to be switched on or switched off (dimmed) by the drive circuit DRH.

In the example in FIG. 2, the light emitting diodes Ld indicated by hatching are switched off and the other light emitting diodes Ld are switched on.

The "switched on" is not necessarily limited to illumination at the maximum illuminance, and it may be illumination at an any illuminance; however, "dimmed" means that the quantity of illumination light is less, compared with that in "switched on." In addition, "switched off' means that the quantity of illumination light is approximately zero.

The light emitting diodes Ld (or laser diodes) are used for the light emission units HL1 and HL2 because, for example, they have such high responsiveness that switch-on/switch-off can be performed at a frequency of 60 Hz or more. However, any light emitting body having such high responsiveness can be used instead of them.

When part of the light emitting diodes Ld is switched off, outgoing light from the headlight HL does not reach irradiation areas corresponding to it. That is, the drive circuit DRH performs lighting control of the light emitting diodes Ld, so that light can be emitted to at least part of irradiation areas among a plurality of divided irradiation areas of the headlight HL.

A configuration for selecting a plurality of irradiation areas and performing irradiation is not limited to the above and may be such that, for example, part of a headlight is shaded with a mask or an optical axis is tilted by an actuator.

Next, the operation of the illumination image capture device LC will be described.

With reference to FIG. 3, when the vehicle VH mounted with the illumination image capture device LC is travelling alone at night, the headlight HL driven by the drive circuit DRH emits light LB (may be a high beam) of a fixed light quantity ahead of the vehicle.

At this time, reflected light from a subject OBJ such as a road or pedestrian is imaged by the camera CA and its image data is input to the image processor PROC frame by frame via the image memory MR. The image processor PROC analyzes the image data by the camera CA; and when detecting a subject OBJ such as a pedestrian from a feature quantity, can provide a notification via a display device (for example, a headup display), which is not illustrated, to a driver.

When there is no headlight of an oncoming vehicle, the image processor PROC recognizes the subject OBJ without through arithmetic control for such as a difference described below, and this is advantageous in terms of the recognition speed.

On the other hand, a case is considered where an oncoming vehicle CV is approaching as shown in FIG. 3.

In this case, when high-intensity light emitted from the headlight of the oncoming vehicle CV is close to the subject OBJ such as a pedestrian, the pixels of an imaging element of the camera CA that has received this high-intensity light get saturated and as a result, the image of the subject OBJ such as a pedestrian may not be picked up.

Then, the image processor PROC of this embodiment performs the control as described below.

The image processor PROC analyzes the image data of one frame by the camera CA and when determining that high-intensity light has entered, transmits a detection signal to the controller CONT.

Here, the "high-intensity light" refers to light which is emitted from a subject having high brightness beyond the dynamic range of the camera CA. Concretely, in a case where both halation which is caused when electric charge stored in pixels gets saturated and black fullness in which the electric charge stored in pixels is approximately zero have occurred within one-frame image at a time, the image processor PROC determines that high-intensity light from a high-brightness subject has entered the pixels in which halation has occurred. Whether halation and black fullness have occurred within the one-frame image can be determined by a histogram indicating a gradation distribution. If a pixel having halation is present alone, there is a possibility of noise; and therefore, detection as a high-brightness subject may be performed only in a case where halation has occurred in a plurality of consecutive pixels.

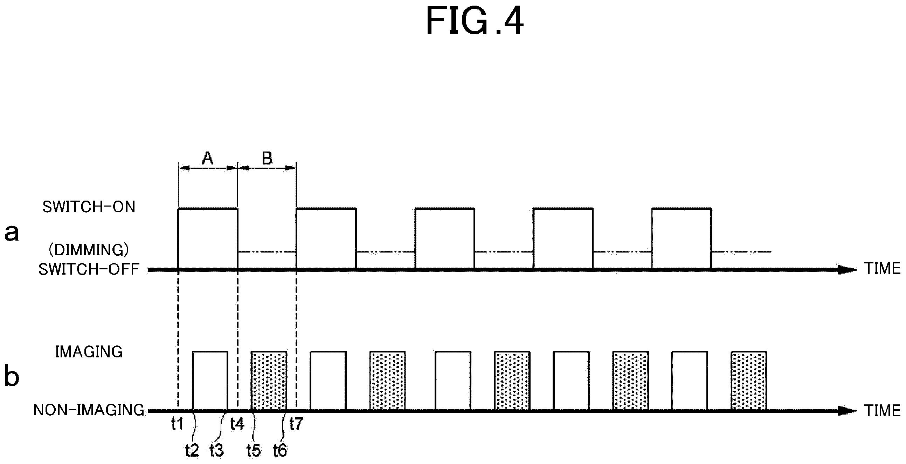

The controller CONT, which has received an input of the detection signal from the image processor PROC, controls the drive circuit DRH to perform switch-on/switch-off control for the headlight HL at a frequency of 60 Hz or more as shown in FIG. 4A. Alternatively, as shown by an alternate long and short dash line, the switch-on/dimming control may be performed for the headlight HL.

Simultaneously, the controller CONT controls the drive circuit DRC in synchronization with the switch-on/switch-off control of the headlight HL, to make the camera CA perform imaging at a predetermined timing as shown in FIG. 4B.

Concretely, after the headlight HL is switched on at time t1 as shown in FIG. 4A and FIG. 4B, imaging by the camera CA starts at time t2 and after imaging by the camera CA ends at time t3, the headlight HL is switched off at time t4 (or is dimmed, for example, to make the light quantity 50 % or less, more preferably, 30 % or less). From this state, imaging by the camera CA starts at time t5 and after imaging by the camera CA ends at time t6, the headlight HL is switched on at time t7.

The above is repeated; and by repeating switch-on and switch-off (or dimming) at a high frequency of 60 Hz or more, an advantage that a driver is less likely to feel uncomfortable with flickering, etc. is provided.

When it is assumed that the switch-on time is A and the switch-off or dimming time is B, A/B is preferable to be 1 (the duty ratio is 1:1). However, not being limited to this, the duty ratio can be any value and the time A and B do not always have to be constant and they may be different respectively.

In this case, for example, by performing setting so that the integration of continuation time and brightness (integral value) is the same in each of the states of switch-on and switch-off or dimming, exposure at the time of obtaining image data (first image data and second image data which are described later) in each of the states can be made the same and thereby, balancing processing can be appropriately performed. On the other hand, without necessarily making the above integration the same, a similar processing may be possible by taking a difference in consideration of a difference in each integration of continuation time and brightness and performing weighting or the like as required. That is, it is sufficient that the first image data and second image data can be appropriately obtained.

In recent years, increasingly higher definition and higher sensitivity have been realized in a commonly used video camera, and photographing of an image having sufficient number of pixels at an extremely high frame rate of 1 kHz or more has become possible. At the same time, also as for a light source, blinking at a high frequency has become possible by technical progress such as adopting LEDs.

Therefore, such processing has become possible that when it is desired to make only a subject obtained by removal of a background into an image, the subject to be obtained is irradiated with a light source, a picked-up image synchronized with it is captured in a digital data format, and a background made into an image uniformly together with the subject is removed via image processing.

Especially, when person's eyes can recognize the blinking of the headlight of an automobile, it causes uncomfortable feeling to be provided in many cases. Therefore, blinking at, at least, about 30 Hz is preferable and blinking at 60 Hz or more is desirable. The frame rate for a video camera is preferable to be twice as many as that; that is, 60 FPS or more and desirably, 120 FPS or more.

Further, there are also cases where it is desirable to repeat switch-on and switch-off (or dimming) in a predetermined pattern, not only in a pattern in which the switch-on and switch-off (or dimming) of the headlight are simply alternately repeated at a fixed cycle. For example, when the oncoming vehicle CV is mounted with a similar illumination image capture device, the similar blinking control of the headlight may be started by detecting emitted light LB of the headlight HL of the own vehicle VH. In this case, when the switch-on and switch-off (or dimming) of the headlight are repeated at the same cycle, a high-brightness subject HD may not be detected in second image data.

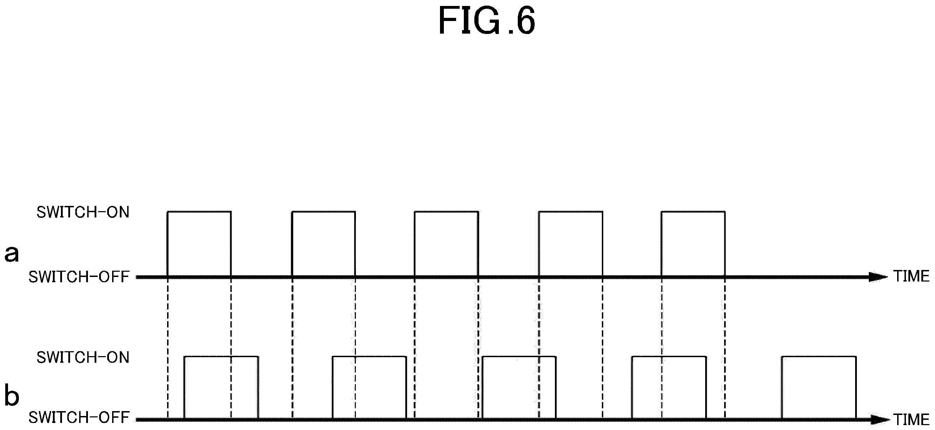

In such a case, when the image processor PROC that functions as a sensor detects a blinking pattern, which is shown in FIG. 6A, of the headlight of the oncoming vehicle CV, it can output a signal containing information on this blinking pattern, to the controller CONT.

The controller CONT having received an input of that signal can make, by controlling the drive circuit DRH, the headlight HL of the own vehicle VH blink in a blinking cycle (lighting pattern) which is different from the blinking pattern of the headlight of the oncoming vehicle CV, as shown in FIG. 6B. Accordingly, the first image data and second image data described later can be appropriately obtained.

It is preferable that such lighting pattern of the own vehicle and blinking pattern of the oncoming vehicle are determined, for example, according to an M-sequence signal. Alternatively, the headlight can be blinked in a random pattern.

According to the above, the first image data can be obtained by imaging during switch-on of the headlight HL and the second image data can be obtained by imaging during the switch-off (or dimming) of the headlight HL. The image data may be either one corresponding to one-frame image or one corresponding to a moving image composed of a plurality of frames. In addition, one-frame image may be formed at one switch-on, or one-frame image can be formed after switch-on is repeated a plurality of times.

If the linearity of sensitivity is not maintained, for example, due to the high intensity of the headlight beam of the oncoming vehicle CV and saturation of the sensitivity, such as halation, occurs in the imaging element of the camera CA, it is desirable that a subject is imaged in an area where the linearity is maintained by performing electronic sensitivity adjustment, exposure time adjustment by shutter speed, or the like.

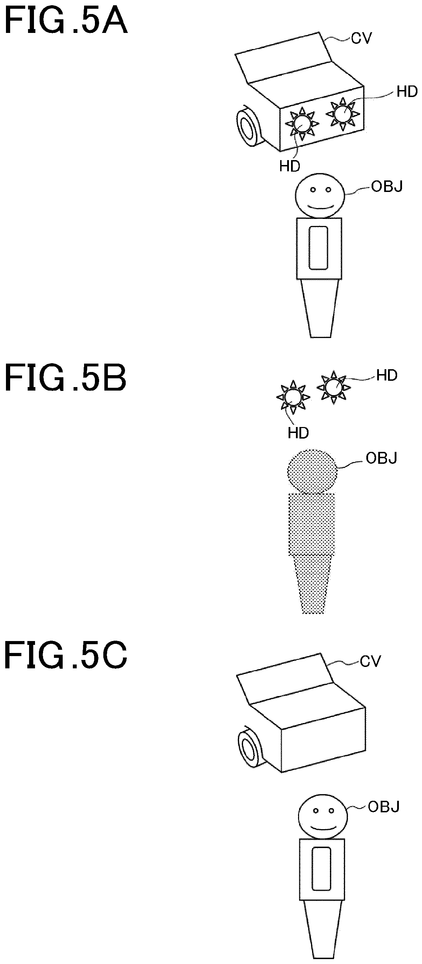

When the image processor PROC generates an image based on the first image data, the one shown in FIG. 5A is obtained, for example.

In the image shown in FIG. 5A, the image of the oncoming vehicle CV and the image of a subject OBJ such as a pedestrian are formed by the emitted light of the headlight HL of the own vehicle VH; however, an image of a subject in the vicinity of a high-brightness subject HD corresponding to the headlight of the oncoming vehicle CV may be lost.

Then, when the image processor PROC generates an image based on the second image data, the one shown in FIG. 5B is obtained, for example.

In the image shown in FIG. 5B, the headlight HL of the own vehicle is switched off (or dimmed) and the subject which does not emit light by itself becomes difficult to see due to an influence of the headlight of the oncoming vehicle CV; and only the high-brightness subject HD corresponding to the headlight of the oncoming vehicle CV is mainly imaged.

In addition, the image processor PROC takes a difference between the first image data and the second image data, obtaining third image data. FIG. 5C shows an image based on the third image data.

According to the image shown in FIG. 5C, only the high-brightness subject HD is removed from the image shown in FIG. 5A; and the image of the oncoming vehicle CV except the headlight and the image of the subject OBJ such as a pedestrian can be clearly obtained.

Alternatively, without completely removing the high-brightness subject HD, it is possible, for example, to reduce brightness and perform replacement with a white object image or with a marking image.

Further, the image processor PROC determines the range of a front screen from the feature quantity specific to the oncoming vehicle CV or determines the range of a face from the feature quantity specific to the subject OBJ such as a pedestrian, based on the third image data; and can output a signal indicating the range to the controller CONT.

The controller CONT, which has received an input of that signal, controls the drive circuit DRH, for example, to stop (or to dim to any emitted light quantity) the light emission of the light emitting diodes Ld for which the front screen of the oncoming vehicle CV is set as an irradiation area ; or to stop (or to dim to any emitted light quantity) the light emission of the light emitting diodes Ld for which the face of the subject OBJ such as a pedestrian is set as an irradiation area ; thereby can also perform a dimming control so that a driver of the oncoming vehicle CV and the pedestrian do not feel glare.

In addition, when the image of the subject OBJ such as a pedestrian is detected from the image shown in FIG. 5C, display is performed while highlighting processing such as enclosing the detected subject OBJ by a red frame or applying color to it is performed on a display device, not illustrated, which can be visually recognized by the driver; thereby, it is also possible to alert the driver.

When the oncoming vehicle CV has passed by, the high-intensity light stops entering the camera CA; and then, based on a non-detection signal which is output from the image processor PROC, the controller CONT switches the control of the drive circuit DRH so as to cause the headlight HL to be continuously switched on.

For example, when a traffic light or the like is observed by human eyes, signal light is seen as if it is kept switched on, by an afterimage; however, it actually repeats blinking at a fixed frequency (50 Hz or 60 Hz). If the imaging timing of the camera CA coincides with this frequency, information on light of the signal light may be lost in image data which is output from the camera CA.

In such a case, either by utilizing the fact that the position of the traffic signal with respect to a road is predetermined or based on the feature quantity of the traffic signal, an imaging area X including the signal light of the traffic signal is determined; and the image processing of the image processor PROC can be made different between image data which is output from this imaging area X and image data which is output from the other imaging area Y. Concretely, assuming that one sheet frame is formed by a plurality of times of imaging; first, the controller CONT performs control to make at least the blinking of the headlight HL differ from the blinking frequency of the traffic light and after that, obtains image data from all the pixels of the camera CA as described above and stores the image data for each of the imaging areas X and Y separately into the Image memory MR. In addition, for the image data from the imaging area Y not including the traffic signal, the image processor PROC performs the same image processing as described above, thereby eliminating the high-brightness subject. On the other hand, for the image data which is output from the imaging area X including the signal light, the image processor PROC performs image processing while image data by imaging in synchronization with the switch-off timing of the traffic signal is thinned out. In this case, to provide a sense of unity to one frame image after composition, it is preferable to change a gain for each of the imaging areas X and Y. After that, by composing image data of the both for which image processing has been performed, for example, an image in which light of the signal light is left while light of the headlight of the oncoming vehicle is eliminated can be obtained. Accordingly, the color of the signal light in front can be transmitted as information to the driver via the display device which is not illustrated.

The present invention is not limited to the examples described in the specification, and it is obvious for a person skilled in the art in the present field, from the examples and spirits described in the present specification, that the invention includes other examples and variations.

For example, the illumination image capture device of the present invention can be used not only for a vehicle, but also for heavy equipment and a working machine, and further, for an airplane, and a ship. In addition, a high-brightness subject that is targeted in the present invention is not limited to the headlight of an oncoming vehicle and may be sunlight such as the afternoon sunlight.

Further, in the above embodiment, the light emission unit is also used as the headlight of the vehicle; however, a dedicated light emission unit may be provided in the illumination image capture device; alternatively, shared use with an auxiliary lamp such as a road lamp, fog lamp, daytime running lamp, or signature lamp is possible.

### INDUSTRIAL APPLICABILITY

The present invention is suitable for providing an illumination image capture device that can contribute to safety driving by, for example, being mounted on a vehicle.

### REFERENCE SIGNS LIST

- CA: camera
- CONT: controller
- CV: oncoming vehicle
- DRC: drive circuit
- DRH: drive circuit
- HD: high-brightness subject
- HL: headlight
- HL1, HL2: light emission unit
- LB: emitted light
- LC: illumination image capture device
- Ld: light emitting diode
- MR: image memory
- OBJ: subject
- PROC: image processor
- VH: vehicle

## Claims

1. An illumination image capture device, comprising:
a light emission unit configured to emit illumination light toward a subject by being switched on;
a camera including an imaging element for imaging the subject and obtaining image data;
a memory configured to store the image data obtained by the camera;
an image processing unit configured to process the image data obtained by the camera; and
a control unit configured to control the light emission unit and the camera; wherein
when a high-brightness subject imaged beyond the dynamic range of the camera is detected, the control unit controls the light emission unit to repeat switch-on and either switch-off or dimming at a predetermined lighting timing, and controls the camera to image the subject at the switch-on timing of the light emission unit and obtain first image data and also to image the subject at the switch-off or dimming timing of the light emission unit and obtain second image data; and
the image processing unit generates third data based on a difference between the first image data and the second image data, the third image data being such that the high-brightness subject has been either removed or reduced in brightness from the subject imaged at the time of switch-on of the light emission unit.

2. The illumination image capture device according to claim 1, wherein
the illumination image capture device is mounted on a vehicle that uses the light emission unit also as a headlight.

3. The illumination image capture device according to claim 1 or 2, wherein
the light emission unit has a light emitting diode or laser diode as a light source.

4. The illumination image capture device according to claim 3, wherein
the light source of the light emission unit is arranged in plurality side by side and each of the light sources can be independently switched on and switched off or dimmed.

5. The illumination image capture device according to any one of claims 1 to 4, wherein
the light emission unit has a plurality of divided illumination areas and based on the third image data, selects and switches off or dims at least one of the divided illumination areas.

6. The illumination image capture device according to any one of claims 1 to 5, wherein
the image processing unit and the memory are incorporated into a single chip.

7. The illumination image capture device according to any one of claims 1 to 6, wherein
the light emission unit repeats switch-on and switch-off or dimming at a cycle of at least 60 Hz or more.

8. The illumination image device according to any one of claims 1 to 7, wherein
the camera adjusts an exposure time so as to image the subject in an area having linearity in the imaging element.

9. The illumination image capture device according to any one of claims 1 to 8, wherein
when an imaging area of the camera is divided into pluralities, the image processing unit performs different image processing for each piece of image data that is output from the divided imaging areas.

10. The illumination image capture device according to any one of claims 1 to 9, wherein,
when it is assumed that the switch-on time of the light emission unit is A and the switch-off or dimming time thereof is B, A/B is 1.

11. The illumination image capture device according to any one of claims 1 to 10, wherein
the illumination image capture device comprises a sensor for detecting, when the high-brightness subject emits blinking light, a blinking pattern of the blinking light, and wherein
the light emission unit repeats switch-on and switch-off or dimming at a lighting timing different from the blinking pattern detected by the sensor.

12. The illumination image capture device according to claim 11, wherein
the blinking pattern and the lighting timing are each determined by an M-sequence signal.
